# EUROPÄISCHE PATENTSCHRIFT

(11) **EP 1 124 884 B1**
(45) Veröffentlichungstag und Bekanntmachung des Hinweises auf die Patenterteilung: **21.05.2003**
(21) Anmeldenummer: 99944618.0
(22) Anmeldetag: 07.09.1999
(51) Int. Cl.: C08J 3/22, C08L 67/02

(54) **VERFAHREN ZUR HERSTELLUNG VON HOCHVISKOSEN POLYESTERN**
METHOD FOR PRODUCING HIGHLY VISCOUS POLYESTERS
PROCEDE DE PRODUCTION DE POLYESTERS A HAUTE VISCOSITE

(30) Priorität: 15.09.1998 DE 19842152
(43) Veröffentlichungstag der Anmeldung: 22.08.2001
(73) Patentinhaber: BAYER AG, 51368 Leverkusen (DE)
(72) Erfinder: IDEL, Karsten-Josef, D-47802 Krefeld (DE); DIETRICH, Hans-Jürgen, D-47829 Krefeld (DE); MÜLLER, Matthias, D-47229 Duisburg (DE)
(86) Internationale Anmeldenummer: EP9906575
(87) Internationale Veröffentlichungsnummer: WO00015693

(56) Entgegenhaltungen:
- EP-A- 0 438 128
- WO-A-96/40821
- PATENT ABSTRACTS OF JAPAN vol. 018, no. 075 (C-1163), 8. Februar 1994 (1994-02-08) & JP 05 287067 A (TORAY IND INC), 2. November 1993 (1993-11-02)

## Beschreibung

Die vorliegende Erfindung betrifft ein Verfahren zur Herstellung von hochviskosen Polyestern mit reduziertem Gehalt an Säureendgruppen, wobei ein Masterbach aus niederviskosen Polyestern und Oxazolinen hergestellt, dieses anschließend mit einem höherviskosen Polyester vermischt und diese Mischung (Dryblend) weiterverarbeitet wird.

Polyester mit verkappten Carboxylendgruppen sind bereits bekannt. Zur Verkappung der Carboxylendgruppen werden dabei verschiedene mit Carboxylgruppen reagierende Verbindungen eingesetzt.

So ist bekannt, daß Polyester, die freie Carboxylendgruppen aufweisen, mit Oxazolinen unter Ringöffnung reagieren können (US-A 4 351 936, DE-A 42 25 627). Beispielsweise reagieren in 2-Stellung substituierte Δ²-Oxazoline mit Carboxylgruppen zu Esteramiden des Aminoethanols Chem. Rev. 71, 483 - 505, 1971 und Angew. Chem. 78, 913 - 927, 1966).

Eine weitere Methode zur Verkappung von Carboxylgruppen besteht darin, Polyester, die freie Carboxylendgruppen aufweisen, mit Epoxiden umzusetzen, wobei aus den Carboxylgruppen Estergruppen gebildet werden (BP 1 139 379). Weiterhin ist bekannt, Carboxylgruppen durch Umsetzung mit Carbodiimiden zu verkappen (US-A 3 193 522, US-A 3 193 523, US-A 38 35 098). Hier bilden sich aus den Carboxylgruppen zunächst monoacylierte Harnstoffe, die sich durch weitere Umlagerungen stabilisieren. Ein gravierender Nachteil der beiden zuletzt genannten Methoden besteht in der relativ hohen Toxizität der Verkappungsreagenzien und der gebildeten Umlagerungs- und Spaltprodukte, die die Einhaltung besonderer Vorsichtsmaßnahmen bei der Durchführung der Verkappungsreaktion erforderlich macht.

Es ist auch bekannt, Carboxylendgruppen von Polyestern durch Umsetzung mit Polycarbonaten zu verkappen (US-A 35 63 847, EP 0 486 916 B1). Hierbei werden Polycarbonatbausteine über Estergruppen an das Polyestermolekül gebunden.

Ziel der Verkappungsreaktionen ist die Reduktion der Anzahl der freien Carboxylgruppen des Polyesters. Polyester mit einer reduzierten Anzahl von Carboxylendgruppen zeigen eine deutlich verbesserte Hydrolysestabilität. Weiterhin weisen Polyester mit reduziertem Säureendgruppengehalt auch unter mechanischer Belastung eine bessere Thermostabilität und Chemikalienbeständigkeit auf. Der Einsatz von multifunktionellen Verkappungsreagentien kann zu einer Erhöhung des Molekulargewichtes des Polyesters führen.

Zum Verkappen der Carboxylendgruppen mit Oxazolinen sind z.B. folgende Verfahren bekannt:
1. Das Verkappungsreagenz wird bei der Herstellung des Polyesterharzes nach Erreichen des gewünschten Molekulargewichtes zum Ende der Schmelze-Polykondensationsreaktion hinzugegeben.
2. Das Verkappungsreagenz wird mit Polyestergranulat vermischt und durch einen anschließenden Compoundierschnitt in den Polyester eingebracht.

Nachteil der genannten Verfahren ist, daß sie nur zur Stabilisierung von niedrigviskosen Polyestern mit niedrigen Kondensationsgraden geeignet sind. Hochviskose Polyester mit hohen Polymerisationsgraden (hohen Molekulargewichten) werden aus technischen und kinetischen Gründen meist durch Nachkondensation in der festen Phase aus einem niedrigviskosen Polyester-Basisharz hergestellt. Weitere Verarbeitungsschritte, die mit Aufschmelzen des Polyesters einhergehen, führen bei durch Nachkondensation erhaltenen Polyestern zu Molekulargewichtsabbau und damit Verschlechterung der mechanischen und physikalischen Eigenschaften.

Ein weiterer Nachteil des beschriebenen Verfahrens, bei dem ein Oxazolin-Verkappungsreagenz durch Compoundierung in den Polyester eingebracht wird, besteht in der nicht zufriedenstellenden Reaktivität der Oxazoline und hier insbesondere der phenylsubstituierten Oxazoline, um in der für einen Compoundierschritt typischen Zeitdauer eine ausreichende Reduktion des Carboxylendgruppen-Gehaltes zu bewirken.

Es wurde nun ein Verfahren gefunden, hochviskose Polyesterharze mit einem reduzierten Gehalt an Carboxylendgruppen und verbesserter Hydrolysestabilität ohne Abbau des Molekulargewichtes herzustellen. Die erfindungsgemäßen Polyester weisen weiterhin auch unter mechanischer Belastung eine bessere Thermostabilität und Chemikalienbeständigkeit auf.

Ein Vorteil des erfindungsgemäßen Verfahren ist, daß zur Einbringung des Oxazolins in den hochviskosen Polyester kein zusätzlicher Aufschmelzschritt des hochviskosen Polyesters erforderlich ist, der zur Schädigung des Polyesters führen würde. Gleichzeitig wird dem Verkappungsreagenz (Oxazolin) durch zwei Verarbeitungsschritte in der Schmelze ausreichend lange Reaktionszeit zur Verkappung der Carboxylendgruppen geboten. Ein weiterer Vorteil des erfindungsgemäßen Verfahrens liegt darin, daß bei Einsatz von multifunktionellen Oxazolinen ein Aufbau des Molekulargewichtes des hochviskosen Polyestern gefunden wird.

Gegenstand der Erfindung ist daher ein Verfahren zur Herstellung von hochviskosen Polyestern, das dadurch gekennzeichnet ist, daß ein Masterbatch aus niederviskosem Polyester und einer Oxazolin-Verbindung mit einem höherviskosen Polyester zu einem Dryblend vermischt und anschließend das Dryblend weiterverarbeitet wird. Als Dryblend wird hier eine physikalische Mischung fester Thermoplaste (Granulat oder Pulver) verstanden.

Der Masterbatch aus niederviskosem Polyester und Oxazolin-Verbindung wird hergestellt, indem die einzelnen Komponenten vermischt und anschließend compoundiert werden. Das Vermischen der einzelnen Komponenten erfolgt üblicherweise im Temperaturbereich zwischen 0 bis 50°C (vorzugsweise Raumtemperatur). Der Compoundiervorgang wird im allgemeinen bei Temperaturen von 170 bis 380°C, vorzugsweise 200 bis 220°C durchgeführt.

Das Vermischen des höherviskosen Polyesters mit dem Masterbatch aus niederviskosem Polyester und Oxazolin zu einem Dryblend kann sowohl bei Temperaturen unter als auch oberhalb der Raumtemperatur erfolgen. Temperaturen im Bereich zwischen 0 bis 50°C kommen infrage. Vorzugsweise wird bei Raumtemperatur gearbeitet. Ein Vorteil dieser Mischung (Dryblend) ist, daß sie stabil gegen Entmischung ist.

Die Weiterverarbeitung der Mischung (Dryblend) aus höherviskosem Polyester und Masterbatch erfolgt nach üblichen Methoden, beispielsweise durch Compoundierung, Extrusion, Blasformen, Extrusionsblasformen, Spritzguß, Kneten oder Kalandrieren, im allgemeinen bei Temperaturen von 200 bis 300°C, wobei der Temperaturbereich der jeweiligen Verarbeitungstechnik angepaßt wird.

Die Weiterverarbeitung der Mischung (Dryblend) kann zu Granulat, Halbzeugen (z.B. Folien, Kabelummantelungen, Platten, Profile, Rohre) oder Formteilen aller Art erfolgen.

Die relativen Lösungsviskositäten der höher- und niederviskosen Polyester werden so ausgewählt, daß die Differenz der relativen Lösungsviskositäten des höher- und niederviskosen Polyester mindestens 0,05, vorzugsweise mindestens 0,1, insbesondere mindestens 0,15 beträgt.

Der erfindungsgemäße Effekt tritt auch bei deutlich größeren Viskositätsunterschieden auf. Beispielhaft sei eine Differenz in ηᵣₑₗ von 0,7 genannt.

Die niederviskosen Polyester haben im allgemeinen eine relative Lösungsviskosität (ηᵣₑₗ) kleiner 1,75.

Die höherviskosen Polyester haben im allgemeinen eine relative Lösungsviskosität größer gleich 1,75.

Die relative Lösungsviskosität (ηᵣₑₗ) wird bestimmt an 5 g Polymer pro Liter in Phenol/ortho-Dichlorbenzol (1:1 Gew.-Teile) bei einer Temperatur von 25°C.

Der Gehalt an Oxazolin-Verbindung im Masterbatsch beträgt im allgemeinen 5 bis 60 Gew.-%, vorzugsweise 10 bis 40 Gew.-% (bezogen auf das Masterbatch).

Der Gehalt an Oxazolin-Verbindung im hochviskosen Polyester nach Verarbeitung des Dryblends beträgt im allgemeinen 0,02 bis 10, vorzugsweise 0,05 bis 5, insbesondere 0,1 bis 2 Gew.-%, bezogen auf den Polyester und Masterbatch.

Es können eine oder ein Gemisch von Oxazolin-Verbindungen zugesetzt werden.

Als Oxazolin-Verbindungen kommen beispielsweise die in DE-A 4 129 980, DE-A 42 25 627 und WO 96/11 978 genannten infrage. Die Offenbarung dieser Patentanmeldung wird in dieser Hinsicht daher mit zur Offenbarung der vorliegenden Anmeldung gezählt.

Vorzugsweise werden die in WO 96/11 978, Seite 14, letzter Absatz bis Seite 17 unten, und DE-A 41 29 980, Seite 5, Zeile 20 bis 66, beschriebenen Oxazoline eingesetzt.

Besonders bevorzugt sind die tautomeren Formen der Monooxazoline der Formeln 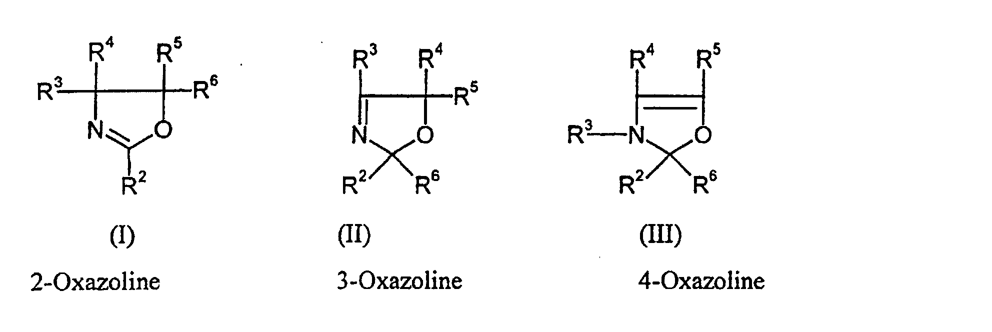 sowie Bisoxazoline der allgemeinen Formel (IV) 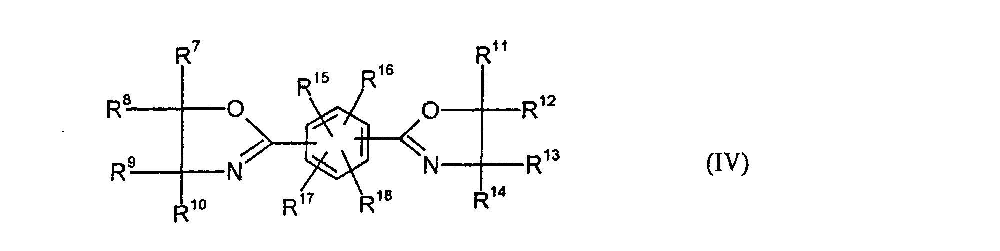 in denen die Substituenten R² bis R⁶ unabhängig voneinander folgende Bedeutung haben können:
Wasserstoffatome, Alkyl-, Alkenyl-, Aryl-, Hydroxyalkyl-, Hydroxyaryl-, Alkoxalkyl-, Alkoxyaryl, Alkylester-, Arylester-, Acyloxyalkyl-, Acyloxyaryl-, Halogenalkyl-, Halogenaryl-, Nitroalkyl, Nitroaryl-, Benzamidoalkyl-, Benzamidoaryl-, Hydroxyaminocarbonyl-, Perhaloalkyl-, Perhaloaryl-, Halogen-, Amino-, Vinyl- oder Mercaptogruppen, wobei die Alkylreste jeweils 1 bis 22 C-Atome aufweisen, die Alkenylreste 2 bis 22 C-Atome und die Arylreste 6 bis 14 C-Atome.

Mischungen veschiedener Oxazoline können ebenfalls eingesetzt werden. Bei den Monooxazolinen sind 2-Oxazoline bevorzugt, insbesondere solche, in denen
- R²: für Alkyl-, Alkenyl-, Hydroxyalkyl-,
- R³, R⁴: für Alkyl-, Hydroxyalkyl-, Alkoxyalkyl-, und
- R⁵, R⁶: für Wasserstoffatome, Alkyl- und Hydroxyalkylgruppen
stehen, wobei die Alkylreste bevorzugt 1 bis 18 C-Atome aufweisen und die Alkylenreste 2 bis 18 C-Atome.

Von den Bisoxazolinen der allgemeinen Formel (IV) sind insbesondere diejenigen zu nennen, die symmetrisch aufgebaut sind (d.h. R⁷= R¹¹, R⁸=R¹², R⁹=R¹³ und R¹⁰=R¹⁴) und in meta- oder para-Stellung zum aromatischen Ring stehen. Insbesondere sind 2,2'-p-Phenylen-bis(4,4'-dimethyl-2-oxazolin), 2,2'-p-Phenylen-bis(4-phenyl-2-oxazolin), 2,2'-m-Phenylen-bis(2-oxazolin), 2,2'-m-Phenylen-bis(4-methyl-2-oxazolin), 2,2'-m-Phenylen-bis(4,4'-dimethyl-2-oxazolin) und 2,2'-m-Phenylen-bis(4-phenyl-2-oxazolin) zu nennen, sowie 2,2'-m-Phenylen-bis(4-phenyl-2-oxazolin) zu nennen, sowie die besonders bevorzugten 2,2'-p-Phenylen-bis(2-oxazolin) und 2,2'-m-Phenylen-bis(2-oxazolin).

Als Polyester werden vorzugsweise Polyalkylenterephthalate eingesetzt.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol-, Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(ß-hydroxyethoxy)-benzol, 2.2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden. Beispiele bevorzugtes Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol, Propandiol-1,3 und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Mischungen von hoch- bzw. niederviskosen Polyestern können ebenfalls eingesetzt werden.

Während der Weiterverarbeitung können übliche Additive, wie Gleit- und Entformungsmittel, Nukleierungsmittel, Antistatika, Pigmente, Stabilisatoren und Flammschutzadditive zugesetzt werden.

Thermoplastische Formmassen auf Basis von hochviskosen Polyestern mit geringen Carboxylendgruppen-Gehalten finden aufgrund ihres Eigenschaftsprofils in den verschiedenen Bereich Verwendung, beispielsweise als Lichtwellenleiterumhüllungen, Kabelummantelungen, im Automobilbereich, in der Elektrotechnik und im Freizeit- und Sportbereich.

### Beispiele

### Herstellung des Masterbatches

Eine Mischung aus 20 Gew.-% 1,3-PBO und 80 Gew.-% niedrigviskosem Polybutylenterephthalat (PBT) mit einer relativen Lösungsviskosität ηᵣₑₗ von 1,66 werden bei Raumtemperatur vermischt und anschließend bei einer Massetemperatur von ca. 180 - 220°C mit einem Extruder des Typs ZSK 31/1 compoundiert.

### Herstellung des Dryblends

Die jeweilige Menge an o.g. Masterbatch wird mit der entsprechenden Menge hochviskosem PBT mit einer relativen Lösungsviskosität ηᵣₑₗ von 1,85 bei Raumtemperautur vermischt. Die Mengenangaben sind in Tabelle 1 aufgeführt.

### Abschließende Verarbeitung des Dryblends

Das Dryblend wird in diesem Beispiel im Spritzgußverfahren auf einer Spritzgußmaschine des Typs Arburg 320-210-500 bei einer Massetemperatur von 240 - 280°C und Werkzeugtemperatur von 80°C zu Schulterstäben (3mm Dicke gemäß ISO 527) verarbeitet. Die Ergebnisse der Untersuchungen sind Tabelle 1 zu entnehmen. Alle in Tabelle 1 aufgeführten Untersuchungen werden an o.g. Schulterstäben durchgeführt.

Bei 1,3-PBO handelt es sich um 2,2-m-Phenylen-bis(2-oxazolin) [IUPAC: 2,2'-(1,3-Phenylen)bis(4,5-dihydrooxazol)] der Firma Palmarole (Basel, Schweiz).

Die Bestimmung der relativen Lösungsviskosität ηᵣₑₗ erfolgt an einer Lösung von 5g Polymer gelöst in 1 Liter Phenol/Dichlorbenzol (50 Gew.-% / 50 Gew.-%) bei 25°C. Die Bestimmung der COOH-Endgruppen erfolgt durch Auflösen von Probenmaterial in Kresol/Chloroform und anschließender photometrischer Titration. Die Reißdelinung wird am o.g. Schulterstab im Zugversuch nach DIN 53455 gemessen. Die Hydrolyseversuche erfolgen durch Lagerung der o.g. Prüfkörper in einem Varioklav Dampfsterilisator (Typ 300/400/500 EP-Z) bei 100°C in einer gesättigten Wasserdampfatmosphäre.

Wie aus Tabelle 1 zu erkennen ist, führt das erfindungsgemäße Verfahren nach dem abschließenden Verarbeitungsschritt zu Material (A-F), das im Vergleich zu Standard-PBT (Vergleich 1) unter Erhalt der sonstigen Eigenschaften einen niedrigeren COOH-Endgruppengehalt, eine leicht erhöhte Viskosität und eine verbesserte Hydrolysestabilität (angezeigt durch hohe Reißdehnungswerte) aufweist. Vergleich 2 in Tabelle 1 macht deutlich, daß die durch das erfindungsgemäße Verfahren erzielten Vorteile nicht durch Zumischen von reinem 1,3-PBO vor dem abschließendem Verarbeitungschritt erreicht werden können.

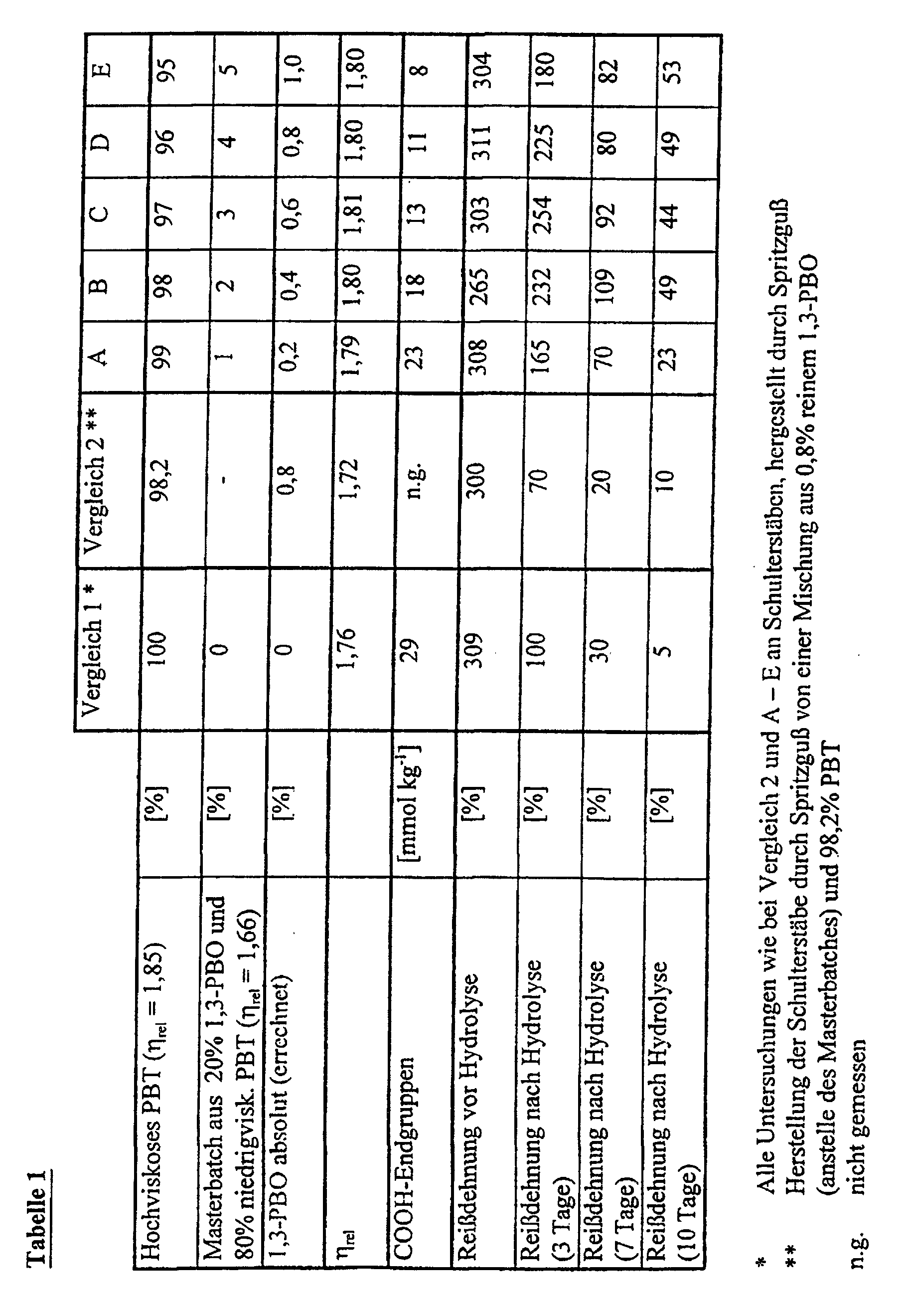

## Patentansprüche

1. Verfahren zur Herstellung von hochviskosen Polyestern, das **dadurch gekennzeichnet ist, dass** ein Masterbatch aus niederviskosem Polyester und einer Oxazolin-Verbindung mit einem höherviskosen Polyester in fester Form zu einem Dryblend vermischt und anschließend das Dryblend weiterverarbeitet wird und dass der niederviskose Polyester eine relative Lösungsviskosität kleiner gleich 1,75 und der höherviskose Polyester eine relative Lösungsviskosität größer gleich 1,75 hat und dass die Differenz der relativen Lösungsviskositäten des höher- und niederviskosen Polyester mindestens 0,05 beträgt und dass der Anteil an Oxazolin in der Gesamtmischung des hochviskosen Polyester und Masterbatch 0,02 bis 10 Gew.-% beträgt.

2. Verfahren gemäß Anspruch 1, **dadurch gekennzeichnet, dass** die Differenz mindestens 0,1 beträgt.

3. Verfahren gemäß Anspruch 2, **dadurch gekennzeichnet, dass** die Differenz mindestens 0,15 beträgt.

4. Verfahren gemäß Anspruch 1 bis 3, **dadurch gekennzeichnet, dass** der Anteil an Oxazolin 0,05 bis 5 Gew.-% beträgt.

5. Verfahren gemäß Anspruch 1 bis 4, **dadurch gekennzeichnet, dass** der Anteil an Oxazolin 0,1 bis 2 Gew.-% beträgt.

6. Verfahren gemäß Anspruch 1 bis 5, **dadurch gekennzeichnet, dass** das Masterbatch durch Vermischen von niederviskosem Polyester und Oxazolin und anschließender Compoundierung hergestellt wird.

7. Verfahren gemäß Anspruch 1 bis 6, **dadurch gekennzeichnet, dass** das Masterbatch 5 bis 60 Gew.-% Oxazolin-Verbindung enthält.

8. Verfahren gemäß Anspruch 1 bis 7, wobei bei der Weiterverarbeitung Additive ausgewählt aus der Gruppe der Gleit- und Entformungsmittel, Nukleierungsmittel, Antistatika, Pigmente, Stabilisatoren und Flammschutzmittel zugesetzt werden.

9. Hochviskose Polyester, erhältlich nach dem Verfahren gemäß Anspruch 1 bis 8.

10. Verwendung der Polyester gemäß Anspruch 1 bis 9 zur Herstellung von Granulat, Halbzeugen oder Formteilen aller Art.

11. Halbzeuge und Formteile, erhältlich aus Polyestern gemäß Anspruch 10.

## Claims

1. Process for the production of high-viscosity polyesters, which is **characterised in that** a masterbatch of low-viscosity polyester and an oxazoline compound is mixed with a higher-viscosity polyester in solid form to form a dry blend and the dry blend is then processed further, and **in that** the low-viscosity polyester has a relative solution viscosity of less than 1.75 and the higher-viscosity polyester has a relative solution viscosity of greater than 1.75, and that the difference between the relative solution viscosities of the higher-viscosity polyester and low-viscosity polyester is at least 0.05 and that the proportion of oxazoline in the total mixture of the high-viscosity polyester and masterbatch is 0.02 to 10 wt.%.

2. Process according to claim 1, **characterised in that** the difference is at least 0.1

3. Process according to claim 2, **characterised in that** the difference is at least 0.15.

4. Process according to claims 1 to 3, **characterised in that** the proportion of oxazoline is 0.05 to 5 wt.%.

5. Process according to claims 1 to 4, **characterised in that** the proportion of oxazoline is 0.1 to 2 wt.%.

6. Process according to claims 1 to 5, **characterised in that** the masterbatch is produced by mixing low-viscosity polyester and oxazoline following by compounding.

7. Process according to claims 1 to 6, **characterised in that** the masterbatch contains 5 to 60 wt.% of oxazoline compound.

8. Process according to claims 1 to 7, in which for the further processing additives selected from the group comprising lubricants and mould release agents, nucleating agents, antistatics, pigments, stabilisers and flameproofing agents are added.

9. High-viscosity polyesters obtainable by the process according to claims 1 to 8.

10. Use of the polyesters according to claims 1 to 9 for the production of granules, semi-finished products or moulded parts of all types.

11. Semi-finished products and moulded parts obtainable from polyesters according to claim 10.

## Revendications

1. Procédé de préparation de polyesters à haute viscosité, qui est **caractérisé en ce que** l'on mélange un mélange maître d'un polyester faiblement visqueux et d'un composé oxazoline avec un polyester de viscosité plus élevée sous forme solide en un mélange sec, et ensuite le mélange sec est traité et **en ce que** le polyester faiblement visqueux a une viscosité relative en solution inférieure ou égale à 1,75 et le polyester de viscosité plus élevée a une viscosité relative en solution supérieure ou égale à 1,75 et **en ce que** la différence des viscosités relatives en solution des polyesters de viscosité plus élevée et faiblement visqueux s'élève à au moins 0,05 et **en ce que** la fraction d'oxazoline dans le mélange total du polyester à viscosité plus élevée et du mélange maître se situe dans l'intervalle allant de 0,02 à 10% en poids.

2. Procédé suivant la revendication 1, **caractérisé en ce que** la différence s'élève à au moins 0,1.

3. Procédé suivant la revendication 2, **caractérisé en ce que** la différence s'élève à au moins 0,15.

4. Procédé suivant la revendication 1 à 3, **caractérisé en ce que** la fraction d'oxazoline se situe dans l'intervalle allant de 0,05 à 5% en poids.

5. Procédé suivant la revendication 1 à 4, **caractérisé en ce que** la fraction d'oxazoline se situe dans l'intervalle allant de 0,1 à 2% en poids.

6. Procédé suivant la revendication 1 à 5, **caractérisé en ce que** le mélange maître est préparé par mélange du polyester à faible viscosité et de l'oxazoline et ensuite, compoundage.

7. Procédé suivant la revendication 1 à 6, **caractérisé en ce que** le mélange maître contient 5 à 60% en poids du composé oxazoline.

8. Procédé suivant la revendication 1 à 7, où lors du traitement ultérieur, on ajoute des additifs choisis parmi le groupe des agents lubrifiants et de démoulage, des agents de nucléation, des antistatiques, des pigments, des stabilisants et des agents de protection contre les flammes.

9. Polyesters à haute viscosité, obtenus par le procédé suivant les revendications 1 à 8.

10. Utilisation du polyester suivant les revendications 1 à 9, pour la préparation de granulés, produits semi-finis ou articles moulés de tout type.

11. Produits semi-finis et articles moulés, obtenus à partir des polyesters suivant la revendication 10.
